# EUROPEAN PATENT APPLICATION

(11) **EP 2 509 197 A1**
(43) Date of publication of application: **10.10.2012**
(21) Application number: 10834415.1
(22) Date of filing: 04.08.2010
(51) Int. Cl.: H02K 19/22, H02K 1/24, H02K 1/27

(54) **VEHICULAR ROTATING ELECTRIC MACHINE**

(30) Priority: 04.12.2009 JP 2009276027
(71) Applicant: Hitachi Automotive Systems, Ltd., Hitachinaka-shi Ibaraki 312-8503 (JP)
(72) Inventor: WATARI Shinjiro, Hitachinaka-shi Ibaraki 312-8503 (JP); YAMAZAKI Shinji, Hitachinaka-shi Ibaraki 312-8503 (JP); YABUKI Minoru, Hitachinaka-shi Ibaraki 312-0062 (JP)
(74) Representative: MERH-IP Matias Erny Reichl Hoffmann
(86) International application number: PCT/JP2010/063224
(87) International publication number: WO 2011/067962

(57) **Abstract**

Disclosed herein is a vehicular electric rotating machine producing high power and adapted to improve distortion of gap magnetic flux density, thereby suppressing magnetic sound increase caused by the increased power while preventing the manufacturing process from being complicated. A permanent magnet is disposed between each circumferentially adjacent claw-shaped magnetic poles 11A and 11B. The permanent magnets are formed and disposed such that the surface thereof facing the claw-shaped magnetic pole on the front side with respect to the rotational direction of the rotor has a smaller area compared to the area of its surface facing the claw-shaped magnetic pole on the rear side with respect to the rotational direction. This configuration enables the power to be increased from a low-speed rotation range, and also distortion of the gap magnetic flux density can be improved. As a result, increase of magnetic sound arising from the increased power can be suppressed.

## Description

### Technical Field

The present invention relates to vehicular electric rotating machines such as generators and motors, and particularly to a vehicular electric rotating machine suitable for producing high power and low noise performance.

### Background Art

To deal with an increase in load due to electrification of vehicular auxiliary devices and enhance comfort in vehicles, recently, there is a need for a vehicular electric rotating machine that can produce high power with low noise.

Patent Document 1 discloses an example of vehicular AC generators intended to provide high power. A vehicular AC generator according to Patent Document 1 is configured such that a permanent magnet is disposed between each set of circumferentially adjacent claw-shaped magnetic poles and leakage magnetic flux between the claw-shaped magnetic poles is reduced, thereby increasing the amount of effective magnetic flux that contributes to power generation. Thus the increase in power is achieved.

However, for the structure as described in Patent Document 1, i.e., the structure having permanent magnets disposed between claw-shaped magnetic poles in order to increase power, a problem arises that magnetic sound increases along with the increase in power.

To address this problem, there are known structures that include techniques for reducing noise. For example, Patent Document 2 discloses a configuration in which the distance of the space between the stator and the rotor (hereinafter referred to as a "gap") is varied such that the distance is larger on the rear side of a claw-shaped magnetic pole with respect to the rotational direction than on the front side thereof. Alternatively, Patent Document 3 discloses a configuration in which each permanent magnet abuts on a claw-shaped magnetic pole on one side in the circumferential direction so that a predetermined distance is ensured between the permanent magnet and the claw-shaped magnetic pole on the other side in the circumferential direction.

### Prior Art Documents

### Patent Documents

Patent Document 1: JP-61-85045-A
Patent Document 2: JP-2003-324873-A
Patent Document 3: JP-2007-89383-A

### Summary of the Invention

### Problem to be Solved by the Invention

For the configuration described in Patent Document 2 in which the gap distance is larger on the rear side of the claw-shaped magnetic pole with respect to the rotational direction of the rotor than on the front side thereof, however, the problem is that since the rotor cores have different shapes in the axially front and back direction, the product cost is increased. Further, since, in this configuration, the thickness of the flange portions for holding the permanent magnets becomes thin on the outer diameter side in the rotational direction, the strength of the flange portions may be insufficient against the radially outward centrifugal force caused by rotation of the rotor.

For the configuration described in Patent Document 3 in which each permanent magnet abuts on a claw-shaped magnetic pole on one side in the circumferential direction so that a predetermined distance is ensured between the permanent magnet and the claw-shaped magnetic pole on the other side in the circumferential direction, a spacer needs to be interposed between each permanent magnet and pole on the other side in the circumferential direction. Thus, the manufacture process is more complicated.

An object of the present invention is to provide a vehicular electric rotating machine producing high power and adapted to improve gap magnetic flux density distortion, thereby suppressing increase of magnetic sound arising from the increased power and preventing the manufacture process from being complex.

### Means for Solving the Problem

An aspect of the prevent invention provides a vehicular electric rotating machine comprising: a stator; and a rotor rotatably disposed to the stator via a gap for rotation; the rotator including a pair of claw-shaped magnet poles with a field coil installed therein, a permanent magnet disposed between the claw-shaped magnetic poles; wherein the permanent magnet defines an area having high magnetic resistance on the rear side of the claw-shaped magnetic pole piece with respect to the rotational direction of the rotor but in the direction toward the end of the claw-shaped magnetic pole piece.

Preferably, the permanent magnets is formed and disposed such that the side thereof facing the claw-shaped magnetic pole piece located on the rear side with respect to the rotational direction of the rotor has a strong magnetic force, and the side facing the claw-shaped magnetic pole piece located on the front side of the rotational direction has a weak magnetic force.

Preferably, the permanent magnet has a magnetic substance in the side thereof facing the claw-shaped magnetic pole piece located on the rear side with respect to the rotational direction of the rotor, and a nonmagnetic substance having high magnetic resistance in the side facing the claw-shaped magnetic pole piece located on the front side in the rotational direction.

The nonmagnetic material may be a clearance.

The permanent magnet may have a generally trapezoidal shape as viewed from the outer circumferential side of the rotor.

The permanent magnet may have a generally triangular shape as viewed from the outer circumferential side of the rotor.

The permanent magnet may have a generally L-shape as viewed from the outer circumferential side of the rotor.

The nonmagnetic material may be formed of a resin member.

The nonmagnetic material may be formed of a resin member, and the nonmagnetic member may be united with the permanent magnet.

The permanent magnet may be a composite magnet, the composite magnet being composed such that the side thereof facing the claw-shaped magnetic pole piece located on the rear side with respect to the rotational direction of the rotor has a strong magnetic force, and the side facing the claw-shaped magnetic pole piece located on the front side with respect to the rotational direction has a weak magnetic force.

### Effect of the Invention

The present invention provides a vehicular electric rotating machine producing high power and adapted to improve gap magnetic flux density distortion, thereby suppressing increase in magnetic sound due to the increased power and preventing the manufacture process from being complex.

### Brief Description of Drawings

[Fig. 1]

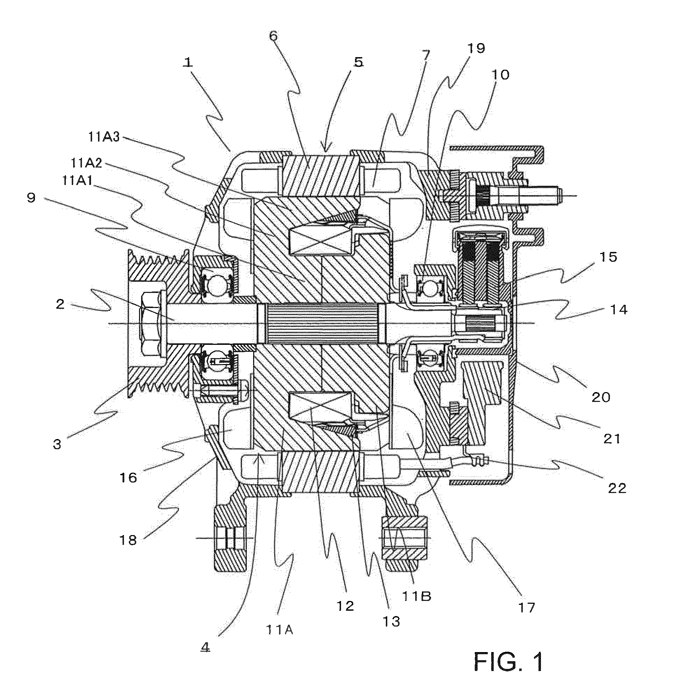

   Fig. 1 is a longitudinal cross-sectional view illustrating the overall configuration of a vehicular electric rotating machine according to a first embodiment.
[Fig. 2]

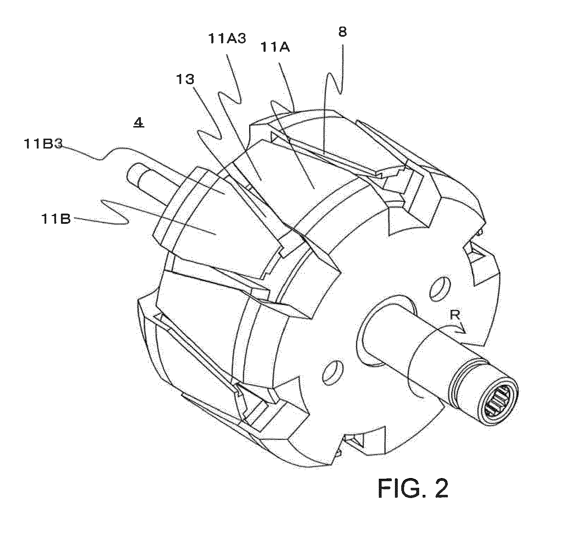

   Fig. 2 is a perspective view illustrating the configuration of the rotor used in the vehicular electric rotating machine according to the first embodiment.
[Fig. 3]

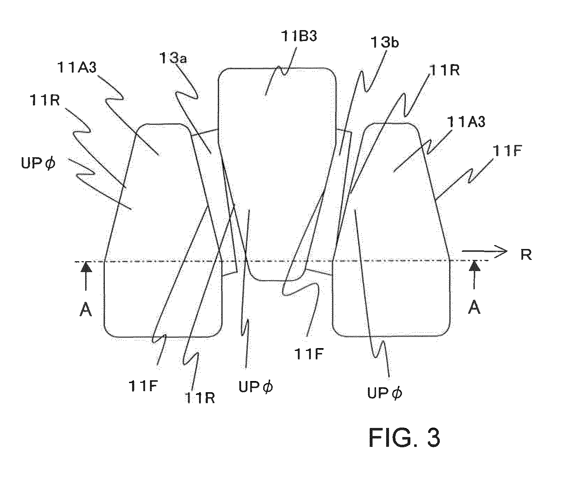

   Fig 3 is a schematic plan view of claw-shaped magnetic poles on the rotor used in the vehicular electric rotating machine according to the first embodiment as viewed from the stator side.
[Fig. 4]

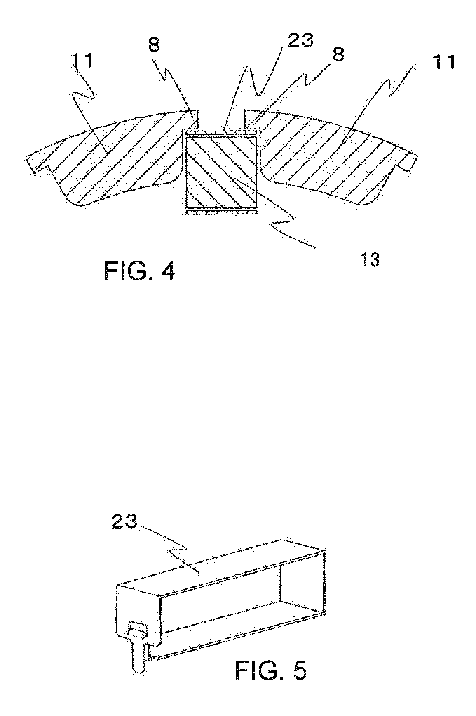

   Fig. 4 is a cross-sectional view of an essential portion of the rotor used in the vehicular electric rotating machine according to the first embodiment.
[Fig. 5]
   Fig. 5 is a perspective view of a protection case used for the rotor in the vehicular electric rotating machine according to the first embodiment.
[Fig. 6]

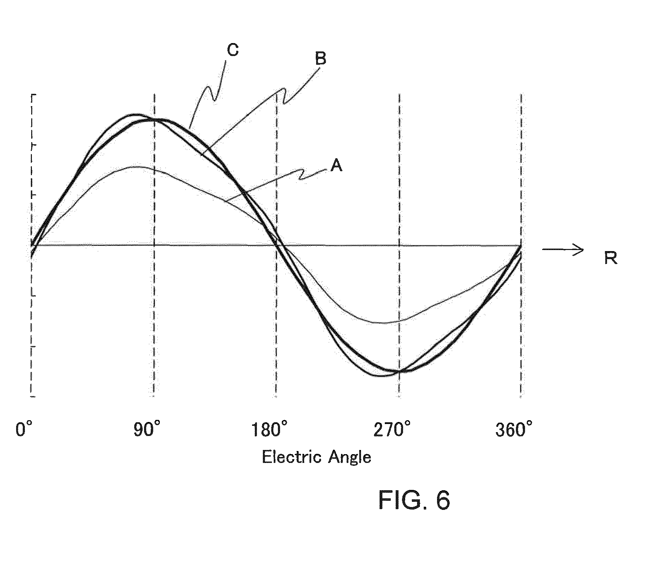

   Fig. 6 is an explanatory view of gap magnetic flux in the vehicular electric rotating machine according to the first embodiment.
[Fig. 7]

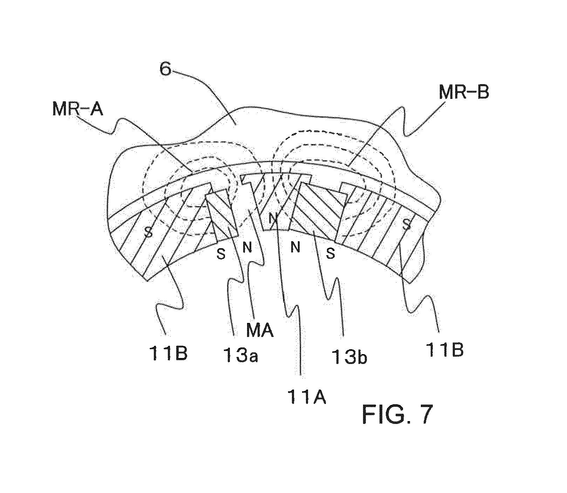

   Fig. 7 is an explanatory view of magnetic flux paths in the vehicular electric rotating machine according to the first embodiment.
[Fig. 8]

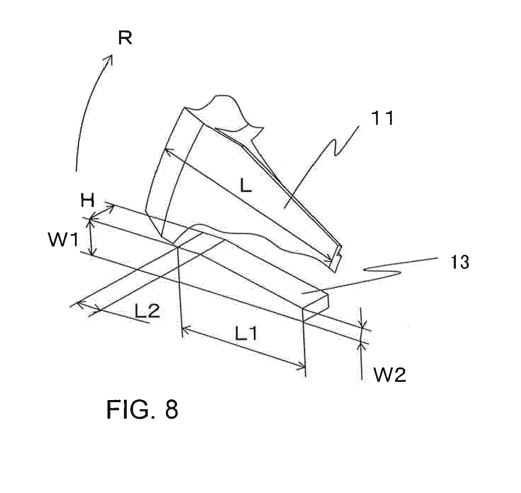

   Fig. 8 is an explanatory view of dimensions of a permanent magnet in the vehicular electric rotating machine according to the first embodiment.
[Fig. 9]

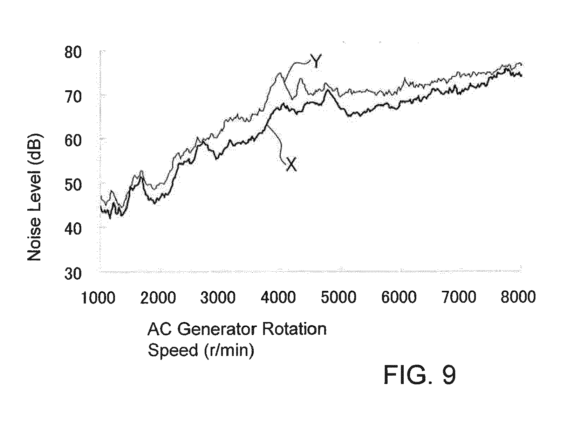

   Fig. 9 is a graph showing noise measurement results of the vehicular electric rotating machine according to the first embodiment.
[Fig. 10]

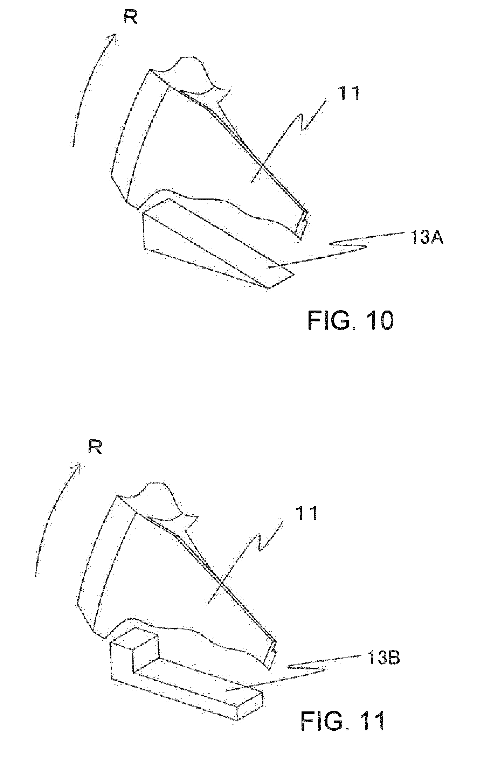

   Fig. 10 is a perspective view showing an essential portion of a rotor for explaining the shape of the permanent magnets used in a vehicular electric rotating machine according to a second embodiment.
[Fig. 11]
   Fig. 11 is a perspective view showing an essential portion of a rotor for explaining the shape of the permanent magnets used in a vehicular electric rotating machine according to a third embodiment.
[Fig. 12]

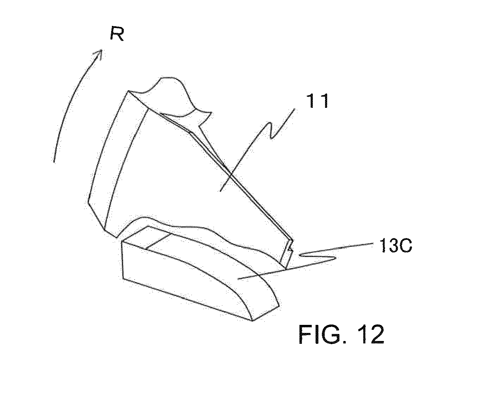

   Fig. 12 is a perspective view showing an essential portion of a rotor for explaining the shape of the permanent magnets used in a vehicular electric rotating machine according to a fourth embodiment.
[Fig. 13]

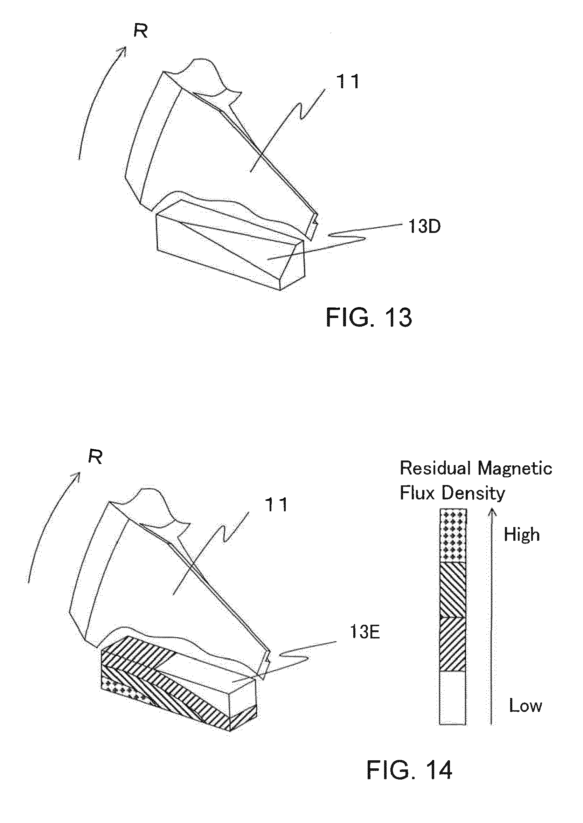

   Fig. 13 is a perspective view showing an essential portion of a rotor for explaining the shape of the permanent magnets used in a vehicular electric rotating machine according to a fifth embodiment.
[Fig. 14]
   Fig. 14 is a perspective view showing an essential portion of a rotor for explaining the shape of the permanent magnets used in a vehicular electric rotating machine according to a sixth embodiment.
[Fig. 15]

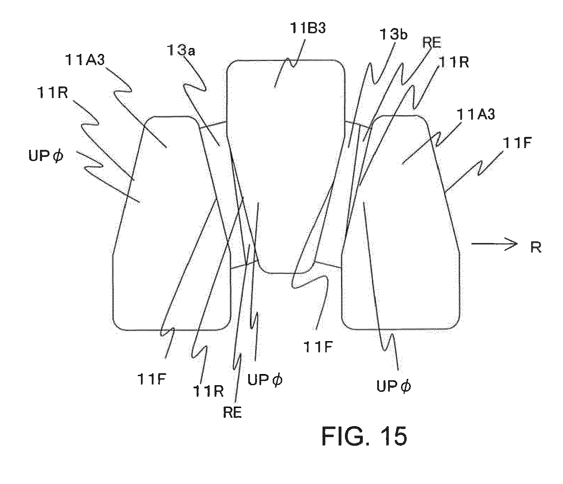

   Fig. 15 is a plan view showing an essential portion of the configuration of a rotor used in a vehicular electric rotating machine according to a seventh embodiment.

### Mode for Carrying Out the Invention

The configuration and operation of a vehicular electric rotating machine according to a first embodiment of the invention will hereinafter be described with reference to Figs. 1 to 9.

First, a description is given of the overall configuration of the electric rotating machine according to this embodiment with reference to Fig. 1.

Fig. 1 is a longitudinal cross-sectional view illustrating the overall configuration of the electric rotating machine according to the first embodiment.

A vehicular AC generator 1 of this embodiment includes a stator 5 and a rotatable rotor 4 disposed on the inner circumferential side of the stator 5 via a gap therebetween.

The rotor 4 has pairs of claw-shaped magnetic poles 11A, 11B at the central portion of a shaft 2. The magnetic poles 11A, 11B are formed of a magnetic material. For example, the claw-shaped magnetic pole 11A includes a boss portion 11A1 around which a field winding is wound; a flange portion 11A2 extending radially from an end portion of the boss portion 11A1; and a claw-shaped magnetic pole piece 11A3 extending from the outer circumferential portion of the flange portion 11A2 in the axially opposite direction. The structure of the claw-shaped magnetic poles 11B is the same as that of the claw-shaped magnetic poles 11A. The field winding 12 is disposed on the inner circumferential side of the central portion of the claw-shaped magnetic poles 11A, 11B (the outer circumferential portion of the boss portion 11A1). A permanent magnet 13 for auxiliary excitation is disposed between the claw-shaped magnetic pole pieces of each pair of claw-shaped magnetic poles 11A, 11B. The rotor 4 is relatively rotatably supported by the shaft 2 inserted through a front bearing 9 and an outer bearing 10.

A pulley 3 is attached to an end of the shaft 2 and a slip ring 14 is attached to the opposite side. The slip ring 14 is in contact with a brush 15 so as to supply electricity to the field winding 12. Further, a front fan 16 and rear fan 17 as cooling fans each having a plurality of blades are installed on the two end faces of the claw-shaped magnetic poles 11A, 11B of the rotor 4. The fans are rotated to flow air from the inner circumferential side to the outer circumferential side.

On the other hand, the stator 5 is constituted by a stator core 6 and a stator winding 7. The stator 5 is disposed to face the rotor 4 via a slight gap therebetween, and is held by a front bracket 18 and a rear bracket 19.

The stator winding 7 is composed of three phases of windings (U-phase, V-phase and W-phase). The leading line of each of the windings is connected to a rectifier circuit 21. The rectifier circuit 21 is a full-wave rectifier circuit constituted by rectifying devices such as diodes, etc. For example, when diodes are used, the cathode terminal is connected to a terminal 22 and the anode side terminal is electrically connected to the main body of the vehicular AC generator. A rear cover 20 serves as a protection cover for the rectifier circuit 21.

Next, the power generation mechanism is described. When the engine starts, the pulley 3 is rotated by the crank shaft via the belt, whereby the rotor 4 rotates via the shaft 2. As direct-current electricity is supplied from the brush 15 via the slip ring 14 to the field winding 12 around the rotor 4, magnetic flux surrounding the field winding 12 occurs. Thus, an N-pole or an S-pole is formed on the claw-shaped magnetic poles 11A, 11B of the rotor 4 alternatively in the circumferential direction. The magnetic flux caused by the field winding 12 passes from the N-pole of the front side claw-shaped magnetic pole 11A through the stator core 6, flows around the stator winding 7, and reaches the S-pole of the rear side claw-shaped magnetic pole 11B of the rotor 4, thereby forming a magnetic circuit around the rotor 4 and the stator 5. The thus generated magnetic flux around the rotor interlinks the stator winding 7. AC inductive voltage occurs in each of the U-, V-, and W-phase stator windings. Therefore, three phases of AC inductive voltage occur as a whole.

The thus generated AC voltage is full-wave rectified and converted into DC voltage by the rectifier circuit 21 composed of rectifying devices such as diodes, etc. The current provided to the field winding 12 is regulated by an IC regulator (not shown) so that the rectified DC voltage would be a constant voltage.

Next, the configuration of the rotor employed in the vehicular electric rotating machine according to this embodiment is described with reference to Figs. 2 to 5.

Fig. 2 is a perspective view illustrating the configuration of the rotor in the electric rotating machine according to the first embodiment. Fig 3 is a schematic plan view of claw-shaped magnetic poles of the rotor in the vehicular electric rotating machine according to the first embodiment, viewed from the stator side. Fig. 4 is a cross-sectional view of an essential portion of the rotor in the vehicular electric rotating machine according to the first embodiment. Fig. 5 is a perspective view of a protection case for the rotor in the vehicular electric rotating machine according to the first embodiment. Reference numerals in Figs 2 to 5 same as those in Fig. 1 indicate the same parts.

In Fig. 2, the arrow R indicates the rotational direction of the rotor 4. Claw-shaped magnetic poles 11A, 11B are arranged such that their claw portions oppose and engage with each other. As shown in Fig. 2, the permanent magnets 13 are disposed between claw-shaped magnetic pole pieces 11A3, 11B3. As shown in Figs. 2 and 4, flange portions 8 are provided to prevent the permanent magnets 13 from moving radially outward due to the centrifugal force caused by rotation of the rotor.

As shown in Fig. 3, the permanent magnets 13a, 13b have a generally trapezoid shape when viewed from the outer circumferential side of the rotor. Incidentally, the thickness of the rotor in the radial direction is constant. Regarding the permanent magnet 13a, the long side of the trapezoid is located on the rear side in the rotational direction R of the rotor and contacts with the surface of the claw-shaped magnetic pole piece 11A3 on the front side with respect to the rotational direction. The short side of the trapezoid is located on the front side in the rotational direction R of the rotor and contacts with the rear side surface of the claw-shaped magnetic pole piece 11B3 with respect to the rotational direction. Thus, the cutoff portion of the generally trapezoidal permanent magnet 13a opposes the claw portion at the end of the claw-shaped magnetic piece 11B3 located on the front side in the rotational direction R of the rotor, defining a clearance therebetween.

Similarly, with respect to the permanent magnet 13b, the long side of the trapezoid is located on the rear side with respect to the rotational direction R of the rotor and contacts with the face 11F of the claw-shaped magnetic piece 11B3 on the front side in the rotational direction. The short side of the trapezoid is located on the front side with respect to the rotational direction R of the rotor and contacts with the face 11R of the claw-shaped magnetic pole piece 11A3 on the rear side in the rotational direction. Thus, the cutoff portion of the generally trapezoidal permanent magnet 13b opposes the claw portion at the end of the claw-shaped magnetic piece 11A3 located on the front side with respect to the rotational direction R, defining a clearance therebetween.

As described above, of the side faces of the generally trapezoidal permanent magnets 13a, 13b that contact with the claw-shaped magnetic pole pieces 11A3, 11B3, the side face having a smaller contact area faces the root portion of the rotational-direction rear side claw-shaped magnetic pole 11A3 or 11B3, and the side face having the larger contact area faces the rotational-direction front side claw-shaped magnetic pole 11B3 or 11A3.

A clearance has high magnetic resistance which is equivalent to that of nonmagnetic materials.

The permanent magnets 13a and 13b fixedly adhere to the rotational-direction front side faces 11F and the rotational-direction rear side faces 11R of the claw-shaped magnetic poles 11A3 and 11B3 by their magnetic force. Incidentally, the flange portions 8 described above with reference to Fig. 2 prevent the permanent magnets 13a and 13b from being moved by the centrifugal force in the radial direction caused by rotation of the rotor.

Referring to Fig. 4, the permanent magnets 13 are each covered with a case 23 for protecting the magnet. Fig. 5 shows the overall shape of the protection case 23.

Since the permanent magnets 13 are disposed between the claw-shaped magnetic poles 11A and 11B, the power can be increased from a low-speed rotation range. Further, since the shape of the permanent magnets is changed to the generally trapezoid shape from the conventional cuboid shape, the amount of permanent magnet used can be reduced. The inertia moment would be reduced, and the strength of the flanges for holding the magnets can be alleviated, resulting in an improved maximum rotating speed. The reduction in the amount of employed permanent magnet, which is expensive, also leads to cost reduction.

In addition, for the reason to be described later, adoption of generally trapezoid permanent magnets allows the magnetic flux passing through the claw-shaped magnetic pole on the rear side in the rotational direction to be reduced compared with the case where conventional cuboid permanent magnets are used. The distortion of the gap magnetic flux density can thus be improved, and in turn increase of magnetic sound resulting from the increased power can be suppressed.

The reason the rotor in the vehicular electric rotating machine according to this embodiment can reduce magnetic sound is next described with reference to Figs. 6 to 9.

First, the gap magnetic flux in the electric rotating machine according to this embodiment is described with reference to Fig. 6.

Fig. 6 shows magnetic flux distribution in the gap between the stator 5 and the rotor 4.

When a rotating machine is being loaded, because of the influence of armature reaction, there is more magnetic flux in the UPφ-portion shown in Fig. 3 of the rotational-direction rear side face 11R than that in the rotational-direction front side face 11F. Therefore, the gap magnetic flux density would contain high frequency components due to distortion, which causes dissonant magnetic sound. The magnetic flux distribution at such instance would have a waveform as the thin solid line A in Fig. 6. Incidentally, the solid line A represents the case where no permanent magnet is disposed.

Cuboid permanent magnets for auxiliary excitation may be disposed between the rotational-direction rear side faces 11R and the rotational-direction front side faces 11F to produce high power. The permanent magnets increase the main magnetic flux, whereby the waveform would be one like the middle-thin solid line B. The waveform represented by the solid line B is a waveform such that merely the magnetic flux of the waveform represented by the solid line A is enlarged. The gap magnetic flux density contains high frequency components due to distortion which causes dissonant magnetic sound. In addition, usage of permanent magnets increases the magnetic flux density. Although the power can be increased, the noise level would also further increase.

Considering such problem, in this embodiment, the permanent magnets 13 are formed into a generally trapezoid shape. The permanent magnets 13 are disposed in such a manner that the side having a smaller contact area with respect to the claw-shaped magnetic pole piece 11A3 or 11B3 contacts with the root portion of the claw-shaped magnetic pole 11A3 or 11B3 on the rear side with respect to the rotational direction, and the side having the larger contact area contacts with the claw-shaped magnetic pole 11B3 or 11A3 on the front side with respect to the rotational direction. With such configuration, the magnetic flux through the rotational-direction front side face 11F would be increased and the magnetic flux through the rotational-direction rear side face 11R would be reduced. This effect is further described below with reference to Fig. 7. The distribution of the gap magnetic flux density would be as the thick solid line C. The waveform of the gap magnetic flux density can be more close to a sine wave, and increase in magnetic sound resulting from the increased power can be suppressed.

Just disposing cuboid magnets increases the magnetic flux through both the rotational-direction front side face 11F and the rotational-direction rear side face 11R (hereinafter referred to as "magnetization side"). The distortion of the gap magnetic flux density cannot be improved and the magnetic sound would increase with the increase in power.

Magnetic flux paths in the vehicular electric rotating machine according to this embodiment are next described with reference to Fig. 7.

Fig. 7 shows the cross-section A-A in Fig. 3. Broken lines MR-A and MR-B represent magnetic flux paths. The broken line MR-A shows a magnetic flux path passing through a portion in which a clearance MA exists between the generally trapezoidal permanent magnet 13a and the claw-shaped magnetic poles 11A, 11B. Part of the magnetic flux from the permanent magnet 13 does not pass through the magnetization side magnetic pole and flows toward the stator core. Therefore, the magnetic flux in the magnetization side can be reduced. On the other hand, the broken line MR-B represents a magnetic flux path passing through a portion in which no air space exists. The permanent magnet partially contacts with the claw-shaped magnetic pole on the magnetization side. The magnetic flux passing through the claw-shaped magnetic pole is increased and thereby power is increased.

As described with reference to Fig. 3, regarding the permanent magnet 13a, the short side of the trapezoid is located on the front side in the rotational direction R of the rotor and contacts with the face 11R of the claw-shaped magnetic pole piece 11B3 on the rear side of the rotational direction. The cutoff portion of the generally trapezoidal permanent magnet 13a faces the claw portion at the end of the claw-shaped magnetic piece 11B3 on the front side in the rotational direction R of the rotor, defining a clearance MA therebetween. When a cuboid permanent magnet is abutted on the rear side of the claw-shaped magnetic pole piece 11B3 with respect to the rotational direction, the effect of increasing power is larger on the root side of the claw-shaped magnetic pole piece 11B3 than on the leading end side thereof. In this embodiment, the short side of the generally trapezoid permanent magnet 13a contacts with the root side of the claw-shaped magnetic pole piece 11B3, so the effect of increasing power is maintained. On the other hand on the leading end side of the claw portion of the claw-shaped magnetic pole piece 11B, the permanent magnet 13a is located with a clearance therebetween. The magnetic flux can therefore be reduced as explained above. As described with Fig. 6, the distribution of the magnetic flux can have a sine waveform such as the solid line C while maintaining the magnetic flux density at a level as high as that of the solid line B.

A description is next given of the dimensions of the permanent magnets in the vehicular electric rotating machine according to this embodiment with reference to Fig. 8.

Fig. 8 is an explanatory view of the dimensions of a permanent magnet in the electric rotating machine according to the first embodiment.

The optimal dimensional relationships of when generally trapezoidal magnets are disposed are described. The length L1 of the permanent magnet 13 with respect to the axial length L of a claw-shaped magnetic pole core 11 should be L1 = 0.67 x L. Other dimensional relationships for forming the generally trapezoidal shape should be L2 = 0.06 x L1 and W2 = 0.75 x W1.
Incidentally, although it is preferred that the radial thickness H is great, the radial thickness H is generally equivalent to the thickness of the root of the claw-shaped magnetic pole piece in this embodiment in order to ensure the area for the field winding 12.

Noise measurement results of the vehicular electric rotating machine according to the first embodiment are next described with reference to Fig. 9.

Fig. 9 is a graph showing the noise measurement results of the vehicular electric rotating machine according to the first embodiment.

In Fig. 9, the thick solid line X indicates the noise level (dB) measured when the generally trapezoidal magnets of this embodiment were disposed. The thin solid line Y indicates the noise level (dB) measured when cuboid magnets were disposed.

As shown in Fig. 9, the noise level of the case where the generally trapezoidal permanent magnets according to this embodiment were disposed is wholly low compared with the case where the conventional cuboid permanent magnets were disposed. In particular, the noise level can be reduced by several dBs when the rotating speed of the AC generator is around 3000 to 4500 (r/min).

The turning force of the engine is transmitted to the AC generator via the pulley 3. If the pulley ratio is three and the rotation speed of the AC generator is 3000 to 4500 (r/min), the engine speed corresponds to 1000 to 1500 (r/min). This engine speed corresponds to a level where, for example, a vehicle is coasting at a low speed such that the engine noise is low. If the noise level of the AC generator is high in such instance, the noise would be very dissonant. However in this embodiment, the noise level of the AC generator while the vehicle is running at a constant speed can be lowered, which is very effective.

Forming the magnets as described above allows the gap magnetic flux density to have a waveform close to a sine waveform and reduces high frequency components. This suppresses occurrence of eddy current in the claw-shaped magnetic poles 11A and 11B of the rotor core, in turn preventing temperature rise arising from the eddy current. It is particularly effective when a rare-earth magnet is used as the permanent magnet 13 where high temperature demagnetization can be prevented.

Different from the structure in which the gap distance on the rotational-direction front side of the claw-shaped magnetic pole is made greater than that on the rotational-direction rear side, the rotor cores 11A and 11B can have the same shape in the axial front-back direction. The production cost can therefore be reduced.

In another conventional structure, a permanent magnet 13 contacts with the claw-shaped magnetic pole 11A or 11B on one side in the circumferential direction while a dedicated spacer is disposed between the magnet 13 and the claw-shaped magnetic pole 11B or 11A on the other side. Meanwhile, according to the present invention, the generally trapezoidal permanent magnets disposed between the claw-shaped magnetic poles 11A and 11B are prevented from moving radially outward by the flange portions 8 of the claw-shaped magnetic poles 11A and 11B. It is therefore unnecessary to dispose the dedicated spacers. The manufacturing process can be simplified, and in addition, the cost can be reduced since the dedicated spacers are not required.

As described above, in this embodiment, permanent magnets are disposed between circumferentially adjacent claw-shaped magnetic poles with magnetic resistance areas on the rear side of the claw-shaped magnetic poles with respect to the rotational direction on the end side thereof. High power is produced while preventing the manufacturing process from being complicated, and further, the distortion of the gap magnetic flux density can be improved so that the magnetic sound increase is suppressed despite the increased power.

The configuration of a vehicular electric rotating machine according to a second embodiment is described with reference to Fig. 10. The general configuration of the vehicular electric rotating machine according to the second embodiment is the same as that shown in Fig. 1.

Fig. 10 is a perspective view of an essential portion of the rotor for explaining the shape of the permanent magnets employed in the vehicular electric rotating machine according to the second embodiment.

As shown in Fig. 10, the permanent magnet 13A has a triangular shape as viewed from the circumferential side direction of the rotor. The opposing space gradually increases as it gets closer to the leading end of the claw-shaped magnetic pole piece 11.

According to this embodiment as well, with such permanent magnets disposed between circumferentially adjacent claw-shaped magnetic poles with magnetic resistance areas on the rear side of the claw-shaped magnetic poles with respect to the rotational direction on the end side thereof, the distortion of gap magnetic flux density can be improved, thereby suppressing increase in the magnetic sound caused by the increased power.

The configuration of a vehicular electric rotating machine according to a third embodiment is described with reference to Fig. 11. The general configuration of the vehicular electric rotating machine according to this embodiment is the same as that shown in Fig. 1.

Fig. 11 is a perspective view of an essential portion of the rotor for explaining the shape of the permanent magnets used in the vehicular electric rotating machine according to the third embodiment.

Referring to Fig. 11, a permanent magnet 13B is L-shaped as viewed from the outer circumferential side of the rotor. In addition, the opposing space gradually increases as it gets closer to the leading end of the claw-shaped magnetic pole piece 11.

According to this embodiment as well, with the permanent magnets disposed between circumferentially adjacent claw-shaped magnetic poles with magnetic resistance areas on the rear side of the claw-shaped magnetic poles with respect to the rotational direction on the end side thereof, the distortion of gap magnetic flux density can be improved, thereby suppressing magnetic sound increase resulting from the increased power.

The configuration of a vehicular electric rotating machine according to a fourth embodiment is described with reference to Fig. 12. The general configuration of the vehicular electric rotating machine according to the fourth embodiment is the same as that shown in Fig. 1.

Fig. 12 is a perspective view of an essential portion of the rotor for explaining the shape of the permanent magnets used in the vehicular electric rotating machine according to the fourth embodiment.

Referring to Fig. 12, a permanent magnet 13C has a gradual curve, e.g., a generally one-fourth elliptic arc as viewed from the outer circumferential side of the rotor. The opposing space gradually increases as is gets closer to the leading end of the claw-shaped magnetic pole piece 11.

According to this embodiment as well, with such permanent magnets disposed between circumferentially adjacent claw-shaped magnetic poles with magnetic resistance areas on the rear side of the claw-shaped magnetic poles with respect to the rotational direction on the end side thereof, the distortion of gap magnetic flux density can be improved, thereby suppressing increase in magnetic sound resulting from the increased power.

The configuration of a vehicular electric rotating machine according to a fifth embodiment is described with reference to Fig. 13. The general configuration of the vehicular electric rotating machine according to this embodiment is the same as that shown in Fig. 1.

Fig. 13 is a perspective view of an essential portion of the rotor for explaining the shape of the permanent magnets used in the vehicular electric rotating machine according to the fifth embodiment.

Referring to Fig. 13, a permanent magnet 13D has a cuboid shape with a triangular pyramid having the base in the claw-end direction and apex in the claw-root direction being cut off therefrom. The opposing space gradually increases as it gets closer to the leading end of the claw-shaped magnetic pole piece 11.

According to this embodiment as well, with such permanent magnets disposed between circumferentially adjacent claw-shaped magnetic poles with magnetic resistance areas on the rear side of the claw-shaped magnetic poles with respect to the rotational direction on the end side thereof, the distortion of gap magnetic flux density can be improved, thereby suppressing increase in magnetic sound resulting from the increased power.

The configuration of a vehicular electric rotating machine according to a sixth embodiment is described with reference to Fig. 14. The general configuration of the vehicular electric rotating machine according to this embodiment is the same as that shown in Fig. 1.

Fig. 14 is a perspective view of an essential portion of the rotor for explaining the shape of the permanent magnets used in the vehicular electric rotating machine according to the sixth embodiment.

Referring to Fig. 14, a permanent magnet 13E is a composite magnet having a cuboid shape. The magnetic force of its interior is not uniform and there is a magnetic force distribution. The residual magnetic flux density distribution of the permanent magnet 13E is such that the part facing the rear portion of the claw-shaped magnetic pole 11 with respect to the rotational direction, i.e., the magnetization side, has low residual magnetic flux density; and the part facing the front portion of the claw-shaped magnetic pole 11 with respect to the rotational direction has high residual magnetic flux density.

The composite magnet can be manufactured as below. A material having a composition that would have large residual magnetic flux density is first put in a mold and formed. Next, the magnet formed in the first process is put into another mold, and a material having a composition that would have slightly lower residual magnetic flux density than that of the first material is also put into the another mold and formed therein. Repeating this process, a cuboid magnetic material having different residual magnetic flux density at each portion thereof, as the one shown in Fig. 14, can be made. The magnetic material is finally magnetized to obtain a permanent magnet having different residual magnetic flux density at each portion thereof as the one shown in Fig. 14.

According to this embodiment as well, with such permanent magnets disposed between circumferentially adjacent claw-shaped magnetic poles with magnetic resistance areas on the rear side of the claw-shaped magnetic poles with respect to the rotational direction on the end side thereof, high power can be produced while preventing the manufacture process from being complicated. In addition, the distortion of gap magnetic flux density can be improved, thereby suppressing increase in magnetic sound resulting from the increased power.

The configuration of a vehicular electric rotating machine according to a seventh embodiment is described with reference to Fig. 15. The general configuration of the vehicular electric rotating machine according to this embodiment is the same as that shown in Fig. 1.

Fig. 15 is a plan view of an essential portion of the configuration of the rotor employed in the vehicular electric rotating machine according to the seventh embodiment. The reference numerals same as those in Fig. 3 indicate the same parts.

In this embodiment, resin RE is filled in the spaces shown in Fig.3, defined between the cutoff portions of the generally trapezoidal permanent magnets 13a, 13b and the corresponding claw-shaped magnetic pole pieces 11A3, 11B3. A thermoplastic resin may be used as the resin. The resin is filled in the spaces and then heated to be cured. Alternatively, a generally trapezoidal permanent magnet may be set in a cuboid mold beforehand, and the resin may be filled in the triangular prism-shaped space and then heated to be formed. The thus integrally formed cuboid of the generally trapezoidal permanent magnet and resin may also be used.

According to this embodiment as well, with such permanent magnets disposed between circumferentially adjacent claw-shaped magnetic poles with magnetic resistance areas on the rear side of the claw-shaped magnetic poles with respect to the rotational direction on the end side thereof, high power can be produced while preventing the manufacture process from being complicated. In addition, the distortion of gap magnetic flux density can be improved, thereby suppressing increase in magnetic sound resulting from the increased power.

Incidentally, in the above embodiments, vehicular AC generators were described as one mode of electric rotating machines. However, the present invention may be applied to other modes as long as permanent magnets are employed between claw-shaped magnetic poles: for example, the invention may be applied to motors that output turning force or motor-generators that combine power generation and driving.

### Explanation of Reference Numerals

- 1: Vehicular AC generator
- 2: Shaft
- 3: Pulley
- 4: Rotor
- 5: Stator
- 6: Stator core
- 7: Stator winding
- 8: Flange
- 9: Front bearing
- 10: Rear bearing
- 11, 11A, 11B: Claw-shaped magnetic pole
- 12: Field winding
- 13: Permanent magnet
- 14: Slip ring
- 15: Brush
- 16: Front fan
- 17: Rear fan
- 18: Front bracket
- 19: Rear bracket
- 20: Rear cover
- 21: Rectifier circuit
- 22: Terminal
- 23: Permanent magnet case
- 24: Gap magnetic flux density
- 25: Magnetic flux path

## Claims

1. A vehicular electric rotating machine comprising:
a stator; and
a rotor rotatably disposed to the stator via a gap for rotation;
the rotator including
a pair of claw-shaped magnet poles with a field coil installed therein,
a permanent magnet disposed between the claw-shaped magnetic poles;
wherein the permanent magnet defines an area having high magnetic resistance on the rear side of the claw-shaped magnetic pole piece with respect to the rotational direction of the rotor but in the direction toward the end of the claw-shaped magnetic pole piece.

2. The vehicular electric rotating machine according to claim 1, wherein:
the permanent magnet is formed and disposed such that the side thereof facing the claw-shaped magnetic pole piece located on the rear side with respect to the rotational direction of the rotor has a strong magnetic force, and the side facing the claw-shaped magnetic pole piece located on the front side of the rotational direction has a weak magnetic force.

3. The vehicular electric rotating machine according to claim 1, wherein:
the permanent magnet has a magnetic substance in the side thereof facing the claw-shaped magnetic pole piece located on the rear side with respect to the rotational direction of the rotor, and a nonmagnetic substance having high magnetic resistance in the side facing the claw-shaped magnetic pole piece located on the front side in the rotational direction.

4. The vehicular electric rotating machine according to claim 3, wherein:
the nonmagnetic material is a clearance.

5. The vehicular electric rotating machine according to claim 3, wherein:
the permanent magnet has a generally trapezoidal shape as viewed from the outer circumferential side of the rotor.

6. The vehicular electric rotating machine according to claim 3, wherein:
the permanent magnet has a generally triangular shape as viewed from the outer circumferential side of the rotor.

7. The vehicular electric rotating machine according to claim 3, wherein:
the permanent magnet has a generally L-shape as viewed from the outer circumferential side of the rotor.

8. The vehicular electric rotating machine according to claim 4, wherein:
the nonmagnetic member is formed of a resin member.

9. The vehicular electric rotating machine according to claim 4, wherein:
the nonmagnetic member is formed of a resin member, and the nonmagnetic member is united with the permanent magnet.

10. The vehicular electric rotating machine for a vehicle according to claim 1, wherein:
the permanent magnet is a composite magnet, the composite magnet being composed such that the side thereof facing the claw-shaped magnetic pole piece located on the rear side with respect to the rotational direction of the rotor has a strong magnetic force, and the side facing the claw-shaped magnetic pole piece located on the front side with respect to the rotational direction has a weak magnetic force.
